# EUROPEAN PATENT APPLICATION

(11) **EP 3 301 746 A1**
(43) Date of publication of application: **04.04.2018**
(21) Application number: 17186400.2
(22) Date of filing: 16.08.2017
(51) Int. Cl.: H01M 8/0206, H01M 8/0213, H01M 8/0228, H01M 8/0254

(54) **SEPARATOR FOR FUEL CELL**

(30) Priority: 30.09.2016 JP 2016193335
(71) Applicant: Toyota Shatai Kabushiki Kaisha, Kariya-shi, Aichi 448-8666 (JP)
(72) Inventor: SUZUKI, Yukihiro, Kariya-shi, Aichi 448-8666 (JP); MOROZUMI, Eiichirou, Kariya-shi, Aichi 448-8666 (JP)
(74) Representative: Appleyard Lees IP LLP

(57) **Abstract**

A separator for a fuel cell includes a base member, a first layer, and a second layer. The base member is made of a metal material. The first layer is made of a plastic material containing first conductive particles and covers the surface of the base member. The second layer is made of a plastic material containing graphite particles and second conductive particles smaller than the graphite particles, and covers the surface of the first layer.

## Description

### BACKGROUND OF THE INVENTION

The present invention relates to a separator for a fuel cell.

A solid polymer fuel cell includes a pair of metal separators. The pair of separators are arranged to sandwich a membrane electrode assembly.

Japanese Laid-Open Patent Publication No. 2016-62725 discloses a configuration in which a first layer made of a plastic containing conductive particles (for example, titanium nitride particles) is formed to cover the surface of the base member of a separator. The publication also discloses that a second layer made of a plastic containing graphite particles is formed to cover the surface of the first layer. In this separator, the base member, the conductive particles, and the graphite particles constitute a conductive path.

Since the graphite particles are in the form of flakes, the manner of contact between the graphite particles in the second layer tends to be point contact or line contact. This makes it difficult to increase the contact area between the graphite particles. It is thus difficult to reduce the electric resistance of the second layer. This is one of the factors limiting the improvement of the conductivity of the separator.

### SUMMARY OF THE INVENTION

Accordingly, it is an objective of the present invention to provide a separator for a fuel cell that improves conductivity.

To achieve the foregoing objective and in accordance with one aspect of the present invention, a separator for a fuel cell is provided that includes a base member, a first layer, and a second layer. The base member is made of a metal material. The first layer is made of a plastic material containing first conductive particles and covers a surface of the base member. The second layer is made of a plastic material containing graphite particles and second conductive particles smaller than the graphite particles and covers a surface of the first layer.

### BRIEF DESCRIPTION OF THE DRAWINGS

Fig. 1 is a cross-sectional view of a fuel cell in which a separator according to one embodiment is employed;
Fig. 2 is a perspective view of a first separator of the embodiment;
Fig. 3 is an enlarged cross-sectional view of the first separator of the embodiment; and
Fig. 4 is a graph showing the relationship between the compounding ratio of carbon black particles and the contact resistance between the separators.

### DETAILED DESCRIPTION OF THE PREFERRED EMBODIMENTS

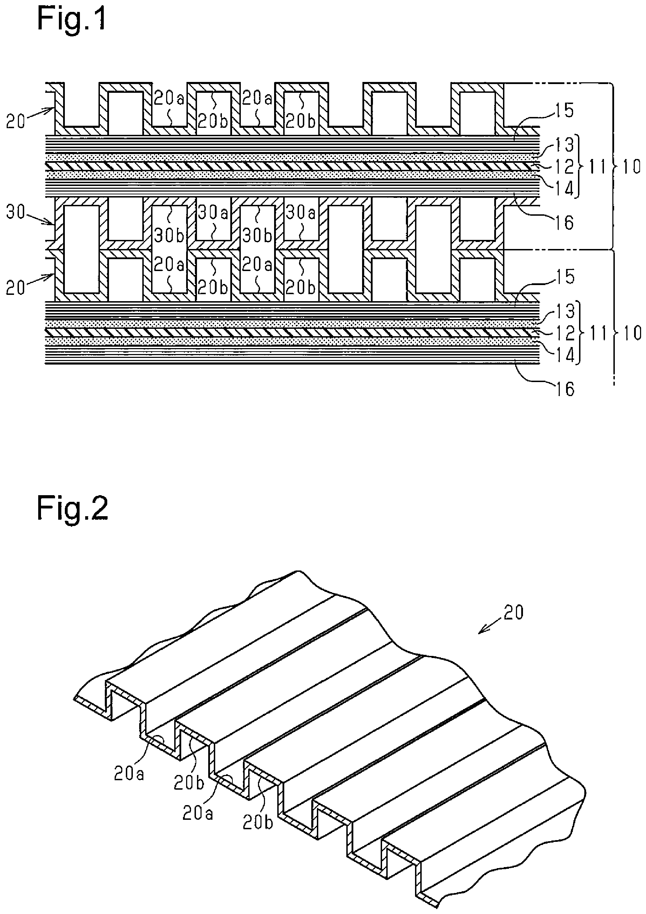

A separator for a fuel cell according to one embodiment will now be described with reference to Figs. 1 to 4.

As shown in Fig. 1, a fuel cell is configured by stacking a plurality of cells 10 together. Each cell 10 includes a membrane electrode assembly (MEA) 11 and a pair of first and second separators 20, 30, which sandwich the membrane electrode assembly 11. The membrane electrode assembly 11 includes an electrolyte membrane 12, which is made of a solid polymer membrane, and a pair of first and second electrode catalyst layers 13 and 14, which sandwiches the electrolyte membrane 12. The first electrode catalyst layer 13 functions as a fuel electrode and the second electrode catalyst layer 14 functions as an air electrode.

First and second gas diffusion layers 15 and 16 made of carbon fibers (more specifically, carbon paper) are respectively arranged between the membrane electrode assembly 11 and the separators 20 and 30.

As shown in Figs. 1 and 2, grooves 20a and 20b are respectively arranged on the upper surface and the lower surface of the first separator 20 and extend alternately. Each of the lower-side grooves 20b faces the membrane electrode assembly 11, and forms a flow path through which fuel gas such as hydrogen gas flows. The backside (the lower surface as viewed in Fig. 1) of each of the upper-side grooves 20a is in contact with the first gas diffusion layer 15.

As shown in Fig. 1, grooves 30a and 30b are respectively arranged on the upper surface and the lower surface of the second separator 30 and extend alternately. Each of the upper-side grooves 30a faces the membrane electrode assembly 11, and forms a flow path through which oxidant gas such as air flows. The backside (the upper surface as viewed in Fig. 1) of each of the lower-side grooves 30b is in contact with the second gas diffusion layer 16.

The backside of each groove 20b (the upper surface as viewed in Fig. 1) of the first separator 20 is in contact with the backside of the corresponding groove 30a (the lower surface as viewed in Fig. 1) of the second separator 30, so that the grooves 20a, 30b define a space of a closed cross section. The closed cross-section space constitutes a flow path through which coolant flows.

The base member of each of the separators 20, 30 is made of a metal material (titanium in the present embodiment). In each of the separators 20 and 30, plastic layers are formed at parts where the separators 20, 30 contact each other and parts where the separators 20, 30 contact the gas diffusion layers 15, 16.

The plastic layers will now be described. Particularly, the plastic layers are formed in parts on the upper surface of the first separator 20 that contact the second separator 30, parts on the lower surface of the first separator 20 that contact the gas diffusion layer 15, parts on the upper surface of the second separator 30 that contact the gas diffusion layer 16, and parts on the lower surface of the second separator 30 that contact the first separator 20. The plastic layers formed in these contacting parts have the same structure. Therefore, only the plastic layer formed on the upper surface of the first separator 20 will be described below, and the description of the plastic layers formed on the other surfaces will be omitted.

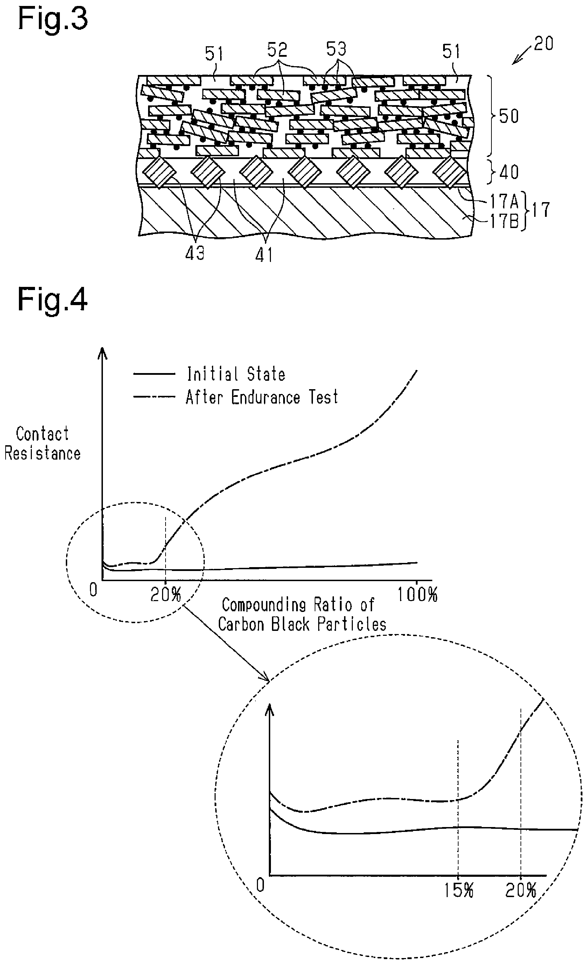

As shown in Fig. 3, the first separator 20 includes a base member 17 on the surface of which a first layer 40 is provided. Further, a second layer 50, which is an outermost layer, is provided on the surface of the first layer 40.

The first layer 40 includes bonding material 41 made of a thermosetting plastic such as epoxy plastic and titanium nitride particles 43 as first conductive particles. The titanium nitride particles 43 have a higher hardness than an oxide film 17A, which corresponds to the surface of the base member 17. The thickness of the bonding material 41 in the first layer 40 is less than the maximum agglomerated particle diameter of the titanium nitride particles 43. In the first layer 40, one end (the lower end as viewed in Fig. 3) of each titanium nitride particle 43 pierces the oxide film 17A of the base member 17 and is in contact with base material 17B of the first separator 20. The other end (the upper end as viewed in Fig. 3) of the titanium nitride particle 43 protrudes out of the layer of the bonding material 41. The agglomerated particles refer to clusters of multiple titanium nitride particles 43 brought into contact with each other without solvent or plastic in between. The maximum agglomerated particle diameter is the maximum value of the diameters of the agglomerated particles.

The second layer 50 includes bonding material 51 made of a thermosetting plastic such as epoxy plastic, graphite particles 52, and carbon black particles 53 as second conductive particles. The particle diameters of the carbon black particles 53 are smaller than the particle diameters of the graphite particles 52. The particle diameters of the carbon black particles 53 in the present embodiment are about several tens of nanometers. The particle diameters of the graphite particles 52 in the present embodiment are about 10 µm. Further, the ratio of the weight W2 of the carbon black particles 53 to the sum (total weight) of the weight W1 of the graphite particles 52 and the weight W2 of the carbon black particles 53 contained in the second layer 50 (compounding ratio = W2/[W1 + W2] x 100) is set to 5%.

In the present embodiment, the first layer 40 and the second layer 50 are formed in the following manner. That is, a first paint containing the titanium nitride particles 43, bonding material made of thermosetting plastic, and a solvent is applied to the surface of the base member 17. The first paint contains methyl ethyl ketone and butyl diglycol (butyl carbitol), for example. Subsequently, a second paint containing the graphite particles 52, the carbon black particles 53, and a solvent such as hexane is applied to the surface of the first paint.

Then, the surface of the base member 17 coated with the first and second paints are pressurized and heated to a temperature at which the paints are cured. As a result, the titanium nitride particles 43 pierce the oxide film 17A of the base member 17 to contact the surface of the base material 17B, and the bonding material is cured to form a layer of the bonding material 41. Then, the layer of the bonding material 41 fixes the titanium nitride particles 43 in a state of being in contact with the base material 17B. Some of the bonding material contained in the first paint flows in between the graphite particles 52, between the carbon black particles 53, and between the graphite particles 52 and the carbon black particles 53. This forms a layer of the bonding material 51. The layer of the bonding material 51 bonds the graphite particles 52 and the carbon black particles 53 to the first layer 40.

Consequently, the inside of the fuel cell is in a state shown in Fig. 1. That is, the second layer 50 (see Fig. 3) on the lower surface of the first separator 20 is in contact with the gas diffusion layer 15, the second layer 50 on the upper surface of the second separator 30 is in contact with the gas diffusion layer 16, and the second layer 50 on the upper surface of the first separator 20 is in contact with the second layer 50 on the lower surface of the second separator 30.

Hereinafter, the operation achieved by the formation of the first layer 40 and the second layer 50 on the surfaces of the separators 20 and 30 will be described.

As shown in Fig. 3, in the second layer 50, parts where the graphite particles 52 are in contact with each other form conductive paths. In the present embodiment, the carbon black particles 53 are mixed in the second layer 50 to be sandwiched between the graphite particles 52. Therefore, in the second layer 50, parts where the carbon black particles 53 are sandwiched by the graphite particles 52 also form conductive paths. Therefore, as compared with a conventional separator in which carbon black particles are not mixed in the second layer, it is possible to increase the number of conduction paths in the thickness direction of the second layer 50, thereby reducing the electric resistance of the second layer 50. As a result, it is possible to reduce the electric resistance of the conductive paths composed of the base member 17, the first layer 40 (the titanium nitride particles 43), and the second layer 50 (the graphite particles 52, the carbon black particles 53), so that conductivity of the separators 20 and 30 is improved.

Further, on the lower surface of the first separator 20, the graphite particles 52 and the carbon black particles 53 in the second layer 50 on the outermost surface are in contact with the gas diffusion layer 15, which is made of carbon fibers. Likewise, on the upper surface of the second separator 30, the graphite particles 52 and the carbon black particles 53 in the second layer 50 on the outermost surface are in contact with the gas diffusion layer 16, which is made of carbon fibers. As a result, the interfaces between the gas diffusion layers 15, 16 and the separators 20, 30 are interfaces where the same carbon-based materials contact each other, so that the interface resistance is reduced. This reduces the contact resistance between the gas diffusion layers 15, 16 and the separators 20, 30. Further, the upper surface of the first separator 20 and the lower surface of the second separator 30 are in contact with each other at the second layers 50 (specifically, the graphite particles 52 and the carbon black particles 53), which are the outermost surfaces. As a result, the interface between the separators 20 and 30 is an interface where the same carbon-based materials contact each other, so that the interface resistance is reduced. This reduces the contact resistance between the separators 20 and 30.

Fig. 4 shows the results of measurement of the relationship between the compounding ratio of the carbon black particles 53 and the contact resistance between the separators 20 and 30 (the second layers 50) obtained through various experiments and simulations performed by the inventors.

As shown by the solid line in Fig. 4, mixing the carbon black particles 53 in the second layer 50 lowers the contact resistance between the separators 20 and 30 as compared with a case where the carbon black particles 53 are not mixed in the second layer 50 (compounding ratio = 0%).

However, as shown by the long dashed short dashed line in Fig. 4, an excessively increased mixed amount of the carbon black particles 53 is likely to increase the contact resistance between the separators 20 and 30 over time. This is because, as the mixed amount of the carbon black particles 53 (see Fig. 3) increases, the proportion of voids (not shown) inside the second layer 50 increases. Accordingly, the entry of moisture and deterioration of the second layer 50 due to such moisture are likely to occur. These voids are formed between the graphite particles 52, between the carbon black particles 53, between the graphite particles 52 and the bonding material 51, and between the carbon black particles 53 and the bonding material 51.

The measurement results in Fig. 4 show that, if the compounding ratio of the carbon black particles 53 is 20% or less, the contact resistance between the separators 20 and 30 in the initial state, in which no change over time has occurred, is low, and the increase in the contact resistance between the separators 20 and 30 over time is suppressed within the allowable range. The measurement results also show that by setting the compounding ratio of the carbon black particles 53 to 15% or less, increase in the contact resistance between the separators 20 and 30 over time is effectively suppressed. In the present embodiment, the compounding ratio of the carbon black particles 53 is determined to be 5% based on the above measurement results.

As described above, the present embodiment achieves the following advantages.

(1) The first layer 40, which is made of a plastic material containing the titanium nitride particles 43, is formed on the surface of the base member 17. Also, the second layer 50 is formed on the surface of the first layer 40. The second layer 50 is made of a plastic material containing the graphite particles 52 and the carbon black particles 53, which are smaller than the graphite particles 52. Therefore, the conductivity of the separators 20, 30 is improved.

(2) The ratio of the weight of the carbon black particles 53 to the total weight of the graphite particles 52 and the carbon black particles 53 contained in the second layer 50 is set to 5%. Therefore, it is possible to reduce the contact resistance between the separators 20 and 30 in the initial state, in which no change over time has occurred, while effectively suppressing increase in the contact resistance between the separators 20 and 30 due to a change over time.

### <Modifications>

The above-described embodiment may be modified as follows.

The ratio of the weight of the carbon black particles 53 to the total weight of the graphite particles 52 and the carbon black particles 53 contained in the second layer 50 may be set to any desired value.

The second conductive particles, which have particle diameters smaller than those of the graphite particles 52, are not limited to the carbon black particles 53. Instead, particles of a conductive material such as titanium nitride particles, titanium carbide particles, and titanium boride particles may be employed.

Carbon black particles may be mixed in the first layer 40.

The first conductive particles contained in the first layer 40 are not limited to the titanium nitride particles 43 but may be changed to particles of another conductive material such as titanium carbide particles, titanium boride particles, and carbon black particles.

## Claims

1. A separator for a fuel cell, **characterized by**:
a base member (17), which is made of a metal material;
a first layer (40), which is made of a plastic material containing first conductive particles (43) and covers a surface of the base member (17); and
a second layer (50), which is made of a plastic material containing graphite particles (52) and second conductive particles (53) smaller than the graphite particles (52) and covers a surface of the first layer (40).

2. The separator for a fuel cell according to claim 1, **characterized in that** a ratio of a weight of the second conductive particles (53) to a total weight of the graphite particles (52) and the second conductive particles (53) is 20% or less.

3. The separator for a fuel cell according to claim 1 or 2, **characterized in that** the second conductive particles are carbon black particles (53).
